# EUROPEAN PATENT SPECIFICATION

(11) **EP 3 869 109 B1**
(45) Date of publication and mention of the grant of the patent: **30.08.2023**
(21) Application number: 19917916.9
(22) Date of filing: 23.09.2019
(51) Int. Cl.: F24F 1/0035, F24F 1/0041, F24F 1/0038, F24F 13/20, F24F 12/00

(54) **AIR CONDITIONER INDOOR UNIT HAVING FRESH AIR ASSEMBLY**
KLIMAANLAGENINNENRAUMEINHEIT MIT FRISCHLUFTANORDNUNG
UNITÉ INTÉRIEURE DE CLIMATISEUR À ENSEMBLE D'AIR FRAIS

(30) Priority: 04.03.2019 CN 201910161217
(43) Date of publication of application: 25.08.2021
(73) Proprietor: Qingdao Haier Air Conditioner General Corp., Ltd., Qingdao, Shandong 266101 (CN); Haier Smart Home Co., Ltd., Qingdao, Shandong 266101 (CN)
(72) Inventor: GUO, Jiaxing, Qingdao, Shandong 266101 (CN); WANG, Ning, Qingdao, Shandong 266101 (CN); YAN, Baosheng, Qingdao, Shandong 266101 (CN); FANG, Qiling, Qingdao, Shandong 266101 (CN); LI, Zongqiang, Qingdao, Shandong 266101 (CN); YANG, Feng, Qingdao, Shandong 266101 (CN); WANG, Xiaoyun, Qingdao, Shandong 266101 (CN)
(74) Representative: Ziebig Hengelhaupt Intellectual Property Attorneys Patentanwaltsanwaltskanzlei PartGmbB
(86) International application number: PCT/CN2019/107339
(87) International publication number: WO 2020/177301

(56) References cited:
- EP-A2- 2 660 525
- EP-A2- 3 021 050
- CN-A- 105 352 060
- CN-A- 106 196 358
- CN-A- 106 196 358
- CN-A- 106 196 358
- CN-A- 109 855 183
- CN-U- 202 734 058
- CN-U- 205 316 602
- CN-U- 206 222 505
- CN-U- 206 973 808
- CN-U- 207 702 662
- CN-U- 207 702 662
- JP-A- 2017 048 932
- US-A1- 2013 017 774

## Description

### FIELD OF THE INVENTION

The present invention relates to the technical field of air conditioning, in particular to an air conditioner indoor unit with a fresh air component.

### BACKGROUND OF THE INVENTION

With the development of society and the continuous improvement of people's living standards, people's requirements for life quality have become higher and higher. People pay more and more attention to the life quality, and air conditioners have become one of the indispensable electrical equipment in people's daily life.

However, during the use of the existing air conditioner, due to the user's breathing, a carbon dioxide concentration in the indoor air becomes higher and higher, and an oxygen concentration becomes lower and lower. If the user stays in this environment for a long time, great harm will be caused to the body. If the user exchanges gas by opening doors and windows, a waste of resources will be caused.

For instance, US 2013/017774 A1 teaches an apparatus for heating, ventilation and air conditioning of an interior space of a structure.

CN 106 196 358 A discloses an air conditioning device, similar to CN 202 734 058 U.

Finally, EP 3 021 050 A2 relates to another air conditioning device having an indoor heat exchanger, a heat recovery ventilator, a supply fan, and an exhaust fan inside a housing and configured to perform at least one of cooling/heating, heat recovery ventilation, and pure ventilation.

Although there are air conditioners with fresh air components, which can exchange indoor dirty air and outdoor fresh air, fresh air that is just exhausted to the indoor environment can be easily discharged to the outdoor environment during the operation, resulting in low-efficient gas exchange.

### BRIEF DESCRIPTION OF THE INVENTION

In view of the above problems, the present invention is provided in order to provide an air conditioner indoor unit with a fresh air component that overcomes the above problems or at least partially solves the above problems.

An objective of the present invention is to provide an air conditioner indoor unit with a fresh air component for improving gas exchange efficiency.

A further objective of the present invention is to improve a temperature experience brought by the air conditioner indoor unit.

The present invention provides an air conditioner indoor unit as defined in independent claim 1.

According to the following detailed descriptions of the specific embodiments of the present invention in cooperation with drawings, those skilled in the art may more clearly understand the above and other objectives, advantages and features of the present invention.

### BRIEF DESCRIPTION OF THE DRAWINGS

Some specific embodiments of the present invention are described in detail below with reference to the drawings by way of examples without limitation. The same reference numbers in the drawings mark the same or similar components or parts. Those skilled in the art should understand that the drawings are not necessarily drawn in scale. In the drawings:
Figure 1 is a side sectional view of an air conditioner indoor unit according to an embodiment of the present invention;
Figure 2 is a schematic rear view of the air conditioner indoor unit according to an embodiment of the present invention;
Figure 3 is a schematic structural view of a fresh air component of the air conditioner indoor unit according to an embodiment of the present invention;
Figure 4 is a schematic rear view of the fresh air component of the air conditioner indoor unit according to an embodiment of the present invention;
Figure 5 is a side view of the fresh air component of the air conditioner indoor unit according to an embodiment of the present invention; and
Figure 6 is a sectional view of an air outlet module of the fresh air component of the air conditioner indoor unit according to an embodiment of the present invention.

### DETAILED DESCRIPTION

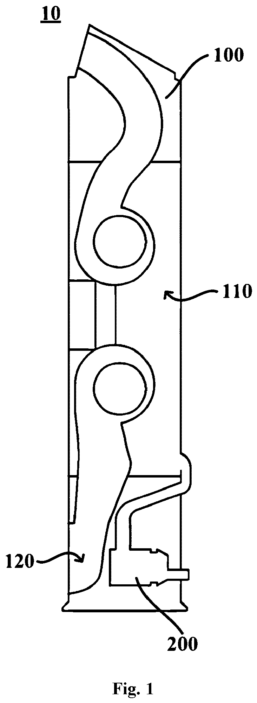

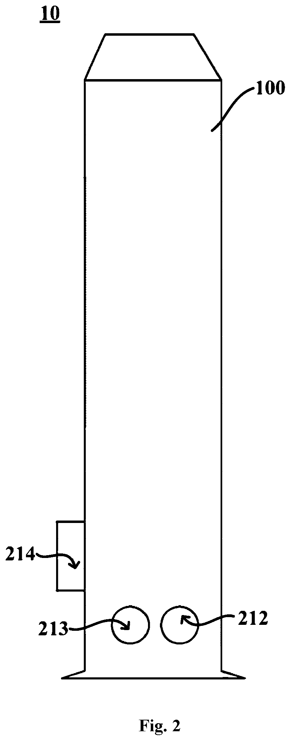

The present embodiment provides an air conditioner indoor unit 10. Figure 1 is a side sectional view of the air conditioner indoor unit 10 according to an embodiment of the present invention, and Figure 2 is a schematic rear view of the air conditioner indoor unit 10 according to an embodiment of the present invention. The air conditioner indoor unit 10 includes an indoor unit housing 100 and a fresh air component 200. The fresh air component 200 is disposed at a bottom in the indoor unit housing 100. The fresh air component 200 is disposed at the bottom in the indoor unit housing 100 because carbon dioxide accumulates indoors from the bottom up, which is helpful for exhausting indoor air with a high carbon dioxide concentration and improving the efficiency.

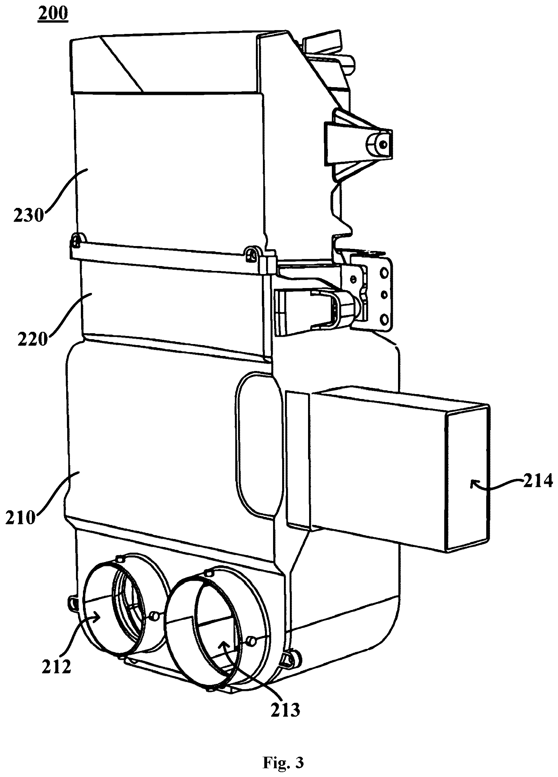

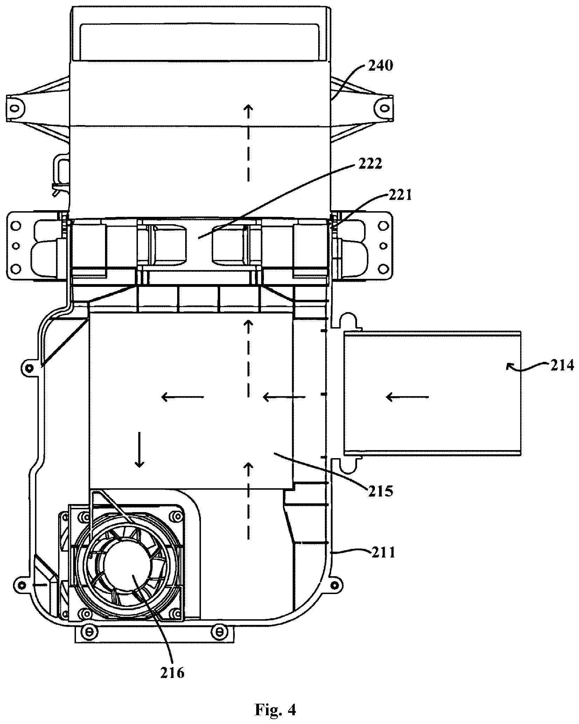

Figure 3 is a schematic structural view of the fresh air component 200 of the air conditioner indoor unit 10 according to an embodiment of the present invention, and Figure 4 is a schematic rear view of the fresh air component 200 of the air conditioner indoor unit 10 according to an embodiment of the present invention. The fresh air component 200 includes an air port module 210, and the air port module 210 includes an air port shell 211.

A rear plate of the air port shell 211 is provided with a dirty air exhaust port 212, and the dirty air exhaust port 212 communicates with the dirty air exhaust pipe so as to be connected with an outdoor environment. In addition, a side plate of the air port shell 211 is provided with a dirty air inlet port 214 for communicating with an indoor environment. A dirty air duct is formed from the dirty air inlet port 214 to the dirty air exhaust port 212. The arrangement manner of the dirty air inlet port 214 and the dirty air exhaust port 212 increases circulation paths of indoor air, makes a temperature of the indoor environment change slowly, and improves a temperature experience of users. Dirty air refers to indoor environment air, and fresh air refers to outdoor environment air.

The air port module 210 further includes an air exhaust fan 216 disposed at the dirty air exhaust port 212, and the air exhaust fan 216 is used for forming an air flow that enables the indoor air to enter the dirty air duct through the dirty air inlet port 214 and then enter the dirty air exhaust pipe through the dirty air exhaust port 212. Directions shown by solid arrows in Figure 4 are a line diagram of the indoor air that can enter the dirty air exhaust port 212 via the dirty air duct through the dirty air inlet port 214. The indoor air enters the dirty air exhaust pipe from the dirty air exhaust port 212 so as to be exhausted to the outdoor environment. In some embodiments of the present invention, an air supply direction of the air exhaust fan 216 is set along an extending direction of the dirty air exhaust port 212, and the air exhaust fan 216 is an axial flow fan of which an axial line is opposite to a central line of the dirty air exhaust port 212.

The rear plate of the air port shell 211 is also provided with a fresh air inlet port 213, the fresh air inlet port 213 communicates with a fresh air inlet pipe so as to be connected with the outdoor environment, and a filter screen may be disposed at an opening of the fresh air inlet pipe to filter large foreign matters in the outdoor air, thereby preventing the foreign matters from polluting the indoor air, and effectively avoiding the damage of the foreign matters to components inside the fresh air component 200.

In some embodiments of the present invention, the dirty air exhaust port 212 and the fresh air inlet port 213 are disposed at a bottom of the rear plate of the air port shell 211 and are at a same height. The arrangement method of the dirty air exhaust port 212 and the fresh air inlet port 213 can reduce a height of the air port module 210, thereby saving a space of the indoor unit housing 100 occupied by the air port module 210. A height of the dirty air inlet port 214 is set higher than a height of the dirty air exhaust port 212 and a height the fresh air inlet port 213. Since the dirty air inlet port 214 and the dirty air exhaust port 212 are at different heights, the indoor air with a suitable temperature can not be exhausted quickly, and a temperature of the indoor air can not be greatly changed, thereby improving the temperature experience of users.

In addition, the fresh air inlet port 213 is connected with a fresh air duct leading to an outside of the fresh air component 200, and a direction shown as dotted arrows in Figure 4 is a line diagram of the outdoor air passing through the fresh air duct. In some embodiments of the present invention, the fresh air duct directly communicates with the indoor environment to directly supply fresh air to the indoor environment.

In other embodiments of the present invention, a heat exchange chamber 110 for arranging a heat exchanger is defined inside the indoor unit housing 100, and the fresh air duct communicates with the heat exchange chamber 110.

During a refrigeration operation of an air conditioner, a refrigerant in a compressor is compressed into high-temperature high-pressure refrigerant vapor. The refrigerant vapor enters an air conditioner outdoor unit. The refrigerant vapor condenses and releases heat in the air conditioner outdoor unit to become a high-temperature high-pressure liquid. After passing through a throttling device, the high-temperature high-pressure liquid is decompressed to become a low-temperature low-pressure gas-liquid mixture. The low-temperature low-pressure gas-liquid mixture enters the heat exchange chamber 110 of the air conditioner indoor unit 10, and the refrigerant absorbs heat and evaporates therein, and enters the compressor again to complete a refrigeration cycle. Since the refrigeration cycle of the air conditioner itself is well known to those skilled in the art, details will not be repeated here.

By enabling the fresh air duct to communicate with the heat exchange chamber 110, a temperature of the outdoor air that causes a poor temperature experience to the users is changed, and is subjected to heat exchange to become air with a temperature suitable for the human body, which is exhausted to the indoor environment through an air outlet port 120, thereby improving the temperature experience of the users.

In addition, the extending directions of the dirty air duct and the fresh air duct are intersected, and the arrangement manner enables the fresh air that is just discharged to the indoor environment from being discharged to the outdoor environment during the operation of the air conditioner indoor unit 10, thereby improving the efficiency of gas exchange.

In some embodiments of the present invention, the air port module 210 further includes a total heat exchange core 215, which is disposed in the air port shell 211 at a position opposite to the dirty air inlet port 214, and an inside of which is provided with a part of the dirty air duct and a part of the fresh air duct, so that when the indoor air passes through the part of the dirty air duct in the total heat exchange core 215, heat of the indoor air is transferred to the outdoor air passing through the part of the fresh air duct in the total heat exchange core 215, thereby avoiding a waste of heat, and making the air conditioner indoor unit 10 more energy-efficient and environment-friendly.

In some embodiments of the present invention, the dirty air inlet port 214 is disposed on the side plate near the fresh air inlet port 213. The arrangement manner of the dirty air inlet port 214 makes a path of the dirty air duct longer, so that the total heat exchange core 215 can fully transfer heat of the indoor air passing through the part of the dirty air duct in the total heat exchange core 215 to the outdoor air passing through the part of the fresh air duct in the total heat exchange core 215, thereby improving a utilization ratio of the total heat exchange core 215.

The fresh air component 200 may further include an air supply module 220 disposed above the air port module 210, the air supply module 220 includes an air supply casing 221 and a fresh air fan 222, an extending section of the fresh air duct is defined in the air supply casing 221, the fresh air fan 222 is disposed in the extending section of the fresh air duct of the air supply casing 221 and used for forming an air flow that enables the outdoor air to move along the fresh air duct, and the fresh air fan 222 is also an axial flow fan that is set to supply air upward so as to match a position of the fresh air exhaust port 231. In the case where the fresh air duct communicates with the heat exchange chamber 110, the fresh air fan 222 acts together with a heat exchange fan in the heat exchange chamber 110 to exhaust the outdoor fresh air subjected to heat exchange to all corners of the indoor environment with a greater air force, so that an indoor temperature is uniform.

The arrangement manner of the air exhaust fan 216 and the fresh air fan 222 enables the air exhaust fan 216 and the fresh air fan 222 to be located at different heights, avoids adverse effects caused by superposition of noises of the two fans, and achieves rational utilization of the space.

The fresh air component 200 further includes an air outlet module 230 disposed above the air supply module 220, and an upper end of the air outlet casing 240 is provided with the fresh air exhaust port 231.

Since carbon dioxide may accumulate in an indoor space from the bottom up, the arrangement manner of the air port module 210, the air supply module 220 and the air outlet module 230 makes the dirty air inlet port 214 be located at the bottom of the entire fresh air component 200, which is helpful to exhausting the air with a higher carbon dioxide concentration at the bottom of the indoor space, and improving the efficiency of gas exchange.

Besides, the arrangement manner of the air port module 210, the air supply module 220 and the air outlet module 230 enables the outdoor air to enter the air port module 210 from the fresh air inlet port 213 at the bottom and directly pass upward through insides of the air supply module 220 and the air outlet module 230 sequentially, so that a flow direction of the outdoor air is singular, thereby reducing air resistance and increasing an air volume.

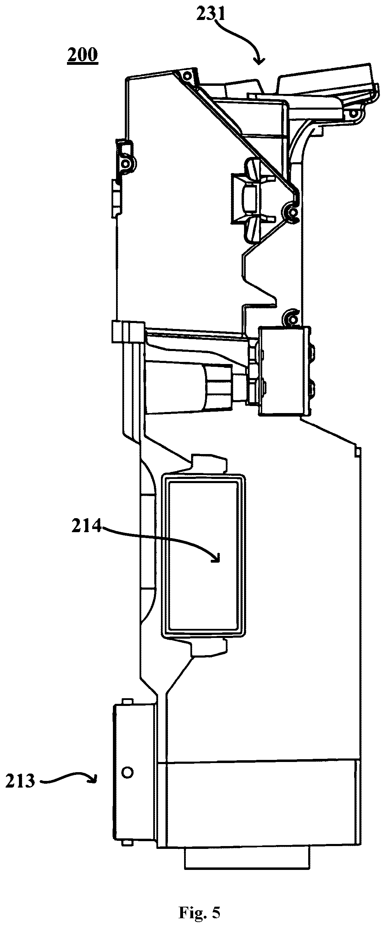

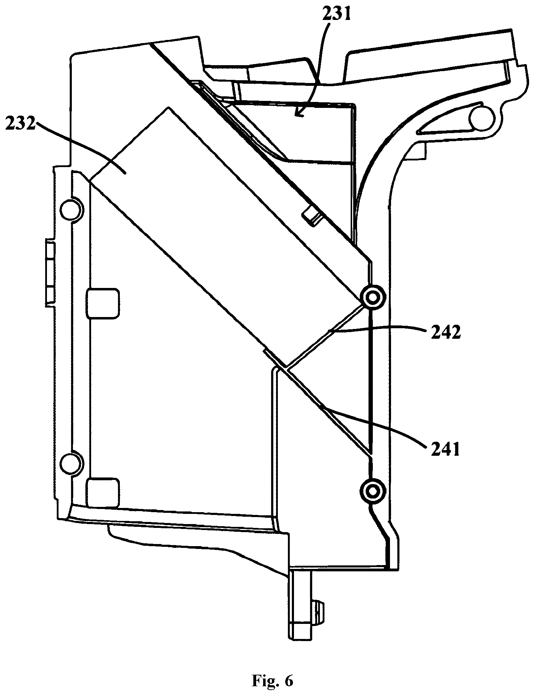

Figure 5 is a side view of the fresh air component 200 of the air conditioner indoor unit 10 according to an embodiment of the present invention, and Figure 6 is a sectional view of the air outlet module 230 of the fresh air component 200 of the air conditioner indoor unit 10 according to an embodiment of the present invention. The air outlet module 230 further includes a purification filter element 232 disposed in the air outlet casing 240 and configured to perform purification treatment on air passing therethrough. The purification filter element 232 may be composed of a primary filter screen, a silver ion filter screen, a high-efficient air filter screen and the like so as to filter out foreign matters such as respirable particles in the outdoor air and make the air exhausted into the indoor environment cleaner.

The air outlet casing 240 includes a lower fixing plate 241 and an upper fixing plate 242. A first end of the lower fixing plate 241 is disposed inside a front plate of the air outlet casing 240, and a second end inclines upward to partially block an air flow passage in the air outlet casing 240, thereby further reducing air resistance of the outdoor air passing through the air outlet module 230. One end of the upper fixing plate 242 is disposed inside the front plate of the air outlet casing 240 and located above the first end of the lower fixing plate 241, and the other end inclines downward and is fixed between the first end and the second end of the lower fixing plate 241. The lower fixing plate 241 and the upper fixing plate 242 are configured to jointly fix the purification filter element 232.

The arrangement manner of the lower fixing plate 241 and the upper fixing plate 242 allows the purification filter element 232 to be placed obliquely, so that the outdoor air contacts the purification filter element 232 to a greater degree, thereby improving the purification efficiency of the purification filter element 232 and further improving the cleanliness of the outdoor air passing therethrough.

An upper part of the front plate of the air outlet casing 240 bends and extends to an outer side of the air outlet casing 240, so that on the basis that a positional relationship of the air port module 210, the air supply module 220 and the air outlet module 230 and the arrangement manner of the lower fixing plate 241 reduce the air resistance of the outdoor air passing through the fresh air duct, the air volume of the fresh air exhaust port 231 is increased.

In some embodiments of the present invention, the air conditioner indoor unit 10 may be a cabinet air conditioner indoor unit, the rear plate of the air port shell 211 is disposed opposite to a rear plate of the cabinet air conditioner indoor unit, and the side plate of the air port shell 211 is disposed opposite to a side plate of the cabinet air conditioner indoor unit. Therefore, the fresh air inlet port 213 and the dirty air exhaust port 212 face the rear of the cabinet air conditioner indoor unit, thereby enhancing an aesthetic property of the cabinet air conditioner and facilitating the installation of the dirty air exhaust pipe and the fresh air inlet pipe; and the dirty air inlet port 214 faces a side of the cabinet air conditioner indoor unit.

In other embodiments of the present invention, the air conditioner indoor unit 10 may also be another type of air conditioner indoor units, such as a wall-mounted air conditioner indoor unit. Then, the fresh air component 200 may be disposed at a bottom in a wall-mounted air conditioner indoor unit housing, a bottom plate of the wall-mounted air conditioner indoor unit housing is provided with an opening through which the fresh air inlet pipe and the dirty air exhaust pipe pass, the side plate is provided with the dirty air inlet port 214, and the fresh air exhaust port 231 may lead to the heat exchange chamber 110 thereof.

The air conditioner indoor unit 10 of the present embodiment includes the indoor unit housing 100 and the fresh air component 200. The fresh air component 200 is disposed at the bottom in the indoor unit housing 100. The fresh air component 200 includes the air port module 210, the air supply module 220 disposed above the air port module 210, and the air outlet module 230 disposed above the air supply module 220. The bottom of the rear plate of the air port shell 211 of the air port module 210 is provided with the fresh air inlet port 213 and the dirty air exhaust port 212, and the side plate is provided with the dirty air inlet port 214. The total heat exchange core 215 is disposed in the air port shell 211, the air exhaust fan 216 is disposed at the dirty air exhaust port 212, and the fresh air fan 222 is disposed in the air supply casing 221 of the air supply module 220. The purification filter element 232 is obliquely disposed in the air outlet module 230, and the fresh air exhaust port 231 is formed above the air outlet casing 240.

When the air conditioner indoor unit 10 starts a fresh air mode, the air exhaust fan 216 operates, the indoor air enters the dirty air duct (including the part of the dirty air duct formed in the total heat exchange core 215) through the dirty air inlet port 214, and then enters the dirty air exhaust pipe through the dirty air exhaust port 212 to be exhausted to the outdoor environment. At the same time, the fresh air fan 222 operates, the outdoor air enters the fresh air inlet port 213 (at which large foreign matters are filtered out through the filter screen) through the fresh air inlet pipe, enters the fresh air duct (including the part of the fresh air duct formed in the total heat exchange core 215), exchanges heat with the indoor air in the part of the dirty air duct formed in the total heat exchange core 215, filters out the foreign matters such as respirable particles through the purification filter element 232, and finally, is exhausted from the fresh air exhaust port 231. The fresh air exhaust port 231 may be directly connected with the indoor space, or may communicate with the heat exchange chamber 110 of the air conditioner indoor unit 10.

The air conditioner indoor unit 10 of the present embodiment may enter the fresh air mode according to a user's operation instructions, or may enter the fresh air mode by itself according to the carbon dioxide concentration of the indoor air.

The air conditioner indoor unit 10 of the present embodiment includes the indoor unit housing 100 and the fresh air component 200 disposed at the bottom of the indoor unit housing 100. The fresh air component 200 is disposed at the bottom in the indoor unit housing 100 because carbon dioxide accumulates indoors from the bottom up, which is helpful for exhausting the indoor air with a high carbon dioxide concentration and improving the efficiency. The fresh air component 200 is disposed in the indoor unit housing 100, thereby saving the space. The air port module 210 of the fresh air component 200 includes the air port shell 211, the rear plate of which is respectively provided with the dirty air exhaust port 212 for communicating with the dirty air exhaust pipe and the fresh air inlet port 213 for communicating with the fresh air inlet pipe, and the side plate of which is provided with the dirty air inlet port 214 for communicating with the indoor environment. The dirty air duct is formed from the dirty air inlet port 214 to the dirty air exhaust port 212. The arrangement manner of the dirty air inlet port 214 and the dirty air exhaust port 212 increases the circulation paths of indoor air, makes the temperature of the indoor environment change slowly, and improves the temperature experience of the users. The fresh air inlet port 213 is connected with the fresh air duct leading to the outside of the fresh air component 200, and the extending directions of the dirty air duct and the fresh air duct are intersected. The arrangement manner prevents the fresh air that is just discharged to the indoor environment from being discharged to the outdoor environment during the operation of the air conditioner indoor unit 10, thereby improving the efficiency of gas exchange.

## Claims

1. An air conditioner indoor unit (10), comprising:
an indoor unit housing (100); and
a fresh air component (200), disposed at a bottom in the indoor unit housing (100), and comprising an air port module (210), the air port module (210) comprising:
an air port shell (211), a rear plate thereof respectively provided with a dirty air exhaust port (212) for communicating with a dirty air exhaust pipe and a fresh air inlet port (213) for communicating with a fresh air inlet pipe, and a side plate thereof provided with a dirty air inlet port (214) for communicating with an indoor environment, wherein a dirty air duct is formed from the dirty air inlet port (214) to the dirty air exhaust port (212), the fresh air inlet port (213) is connected with a fresh air duct leading to an outside of the fresh air component (200), and
extending directions of the dirty air duct and the fresh air duct are intersected, wherein
the dirty air exhaust port (212) and the fresh air inlet port (213) are disposed at a bottom of the rear plate and are at a same height, and a height of the dirty air inlet port (214) is set higher than a height of the dirty air exhaust port (212) and a height of the fresh air inlet port (213), wherein the air port module (210) further comprises:
a total heat exchange core (215), disposed in the air port shell (211) at a position opposite to the dirty air inlet port (214), and an inside thereof provided with a part of the dirty air duct and a part of the fresh air duct; and
the dirty air inlet port (214) is disposed on the side plate near the fresh air inlet port (213), wherein the air port module (210) further comprises:
an air exhaust fan (216), disposed at the dirty air exhaust port (212), and an air supply direction thereof set along an extending direction of the dirty air exhaust port (212); and the fresh air component (200) further comprises:
an air supply module (220), disposed above the air port module (210), and comprising an air supply casing (221) and a fresh air fan (222), wherein an extending section of the fresh air duct is defined in the air supply casing (221), the fresh air fan (222) is disposed in the extending section of the fresh air duct, and the fresh air fan (222) is set to supply air upward, wherein the fresh air component (200) further comprises:
an air outlet module (230), disposed above the air supply module (220), and comprising an air outlet casing (240), wherein an upper end of the air outlet casing (240) provided with a fresh air exhaust port (231), wherein the air outlet module (230) further comprises:
a purification filter element (232), disposed in the air outlet casing (240), and configured to perform purification treatment on air passing therethrough, **characterized in that** the air outlet casing (240) comprises:
a lower fixing plate (241), a first end thereof disposed inside a front plate of the air outlet casing (240), and a second end thereof inclining upward to partially block an air flow passage in the air outlet casing (240); and
an upper fixing plate (242), one end thereof disposed inside the front plate of the air outlet casing (240) and located above the first end of the lower fixing plate (241), and the other end thereof inclining downward and fixed between the first end and the second end of the lower fixing plate (241), wherein
the lower fixing plate (241) and the upper fixing plate (242) are configured to jointly fix the purification filter element (232).

2. The air conditioner indoor unit (10) according to claim 1, wherein
an upper part of the front plate of the air outlet casing (240) bends and extends to an outer side of the air outlet casing (240).

3. The air conditioner indoor unit (10) according to claim 1, wherein
a heat exchange chamber (110) for arranging a heat exchanger is defined inside the indoor unit housing (100), and the fresh air exhaust port (231) communicates with the heat exchange chamber (110).

4. The air conditioner indoor unit (10) according to claim 1, wherein
the air conditioner indoor unit (10) is a cabinet air conditioner indoor unit (10), the rear plate of the air port shell (211) is disposed opposite to a rear plate of the cabinet air conditioner indoor unit (10), and the side plate of the air port shell (211) is disposed opposite to a side plate of the cabinet air conditioner indoor unit (10).

## Patentansprüche

1. Klimaanlage-Inneneinheit (10), umfassend:
ein Inneneinheit-Gehäuse (100); und
eine Frischluftkomponente (200), die an einem Boden in dem Inneneinheit-Gehäuse (100) angeordnet ist und ein Luftöffnungsmodul (210) umfasst, wobei das Luftöffnungsmodul (210) umfasst:
eine Luftöffnungsschale (211), wobei eine hintere Platte davon jeweils mit einer Schmutzluftabführöffnung (212) zur Verbindung mit einem Schmutzluftabführrohr und einer Frischlufteinlassöffnung (213) zur Verbindung mit einem Frischlufteinlassrohr versehen ist und eine Seitenplatte davon mit einer Schmutzlufteinlassöffnung (214) zur Verbindung mit einer Innenraumumgebung versehen ist, wobei ein Schmutzluftkanal von der Schmutzlufteinlassöffnung (214) zur Schmutzluftabführöffnung (212) ausgebildet ist und die Frischlufteinlassöffnung (213) mit einem Frischluftkanal verbunden ist, der zu einem Äußeren der Frischluftkomponente (200) führt, und
sich die Erstreckungsrichtungen des Schmutzluftkanals und des Frischluftkanals kreuzen, wobei
die Schmutzluftabführöffnung (212) und die Frischlufteinlassöffnung (213) an einem Boden der hinteren Platte angeordnet sind und auf gleicher Höhe liegen und eine Höhe der Schmutzlufteinlassöffnung (214) höher eingerichtet ist als eine Höhe der Schmutzluftabführöffnung (212) und eine Höhe der Frischlufteinlassöffnung (213), wobei das Luftöffnungsmodul (210) ferner umfasst:
einen Gesamtwärmeaustauschkern (215), der in der Luftöffnungsschale (211) an einer Position gegenüber der Schmutzlufteinlassöffnung (214) angeordnet ist, wobei ein Inneres davon mit einem Teil des Schmutzluftkanals und einem Teil des Frischluftkanals versehen ist; und
die Schmutzlufteinlassöffnung (214) auf der Seitenplatte in der Nähe der Frischlufteinlassöffnung (213) angeordnet ist, wobei das Luftöffnungsmodul (210) ferner umfasst:
ein Abluftgebläse (216), das an der Schmutzluftabführöffnung (212) angeordnet ist, wobei eine Luftzufuhrrichtung davon in einer Erstreckungsrichtung der Schmutzluftabführöffnung (212) verläuft; und die Frischluftkomponente (200) ferner umfasst:
ein Luftzufuhrmodul (220), das über dem Luftöffnungsmodul (210) angeordnet ist und ein Luftzufuhrgehäuse (221) und ein Frischluftgebläse (222) umfasst, wobei ein Erweiterungsabschnitt des Frischluftkanals in dem Luftzufuhrgehäuse (221) definiert ist, das Frischluftgebläse (222) in dem Erweiterungsabschnitt des Frischluftkanals angeordnet ist und das Frischluftgebläse (222) zur Luftzufuhr nach oben eingerichtet ist, wobei die Frischluftkomponente (200) ferner umfasst:
ein Luftauslassmodul (230), das über dem Luftzufuhrmodul (220) angeordnet ist und ein Luftauslassgehäuse (240) umfasst, wobei ein oberes Ende des Luftauslassgehäuses (240) mit einer Frischluftabführöffnung (231) versehen ist, wobei das Luftauslassmodul (230) ferner umfasst:
ein Reinigungsfilterelement (232), das in dem Luftauslassgehäuse (240) angeordnet und dazu eingerichtet ist, eine Reinigungsbehandlung an der hindurchströmenden Luft durchzuführen, **dadurch gekennzeichnet, dass** das Luftauslassgehäuse (240) umfasst:
eine untere Befestigungsplatte (241), wobei ein erstes Ende davon innerhalb einer vorderen Platte des Luftauslassgehäuses (240) angeordnet ist und sich ein zweites Ende davon nach oben neigt, um einen Luftstromdurchlass in dem Luftauslassgehäuse (240) teilweise zu blockieren; und
eine obere Befestigungsplatte (242), wobei ein Ende davon innerhalb der vorderen Platte des Luftauslassgehäuses (240) angeordnet ist und sich über dem ersten Ende der unteren Befestigungsplatte (241) befindet und sich das andere Ende davon nach unten neigt und zwischen dem ersten Ende und dem zweiten Ende der unteren Befestigungsplatte (241) befestigt ist, wobei
die untere Befestigungsplatte (241) und die obere Befestigungsplatte (242) dazu eingerichtet sind, gemeinsam das Reinigungsfilterelement (232) befestigen.

2. Klimaanlage-Inneneinheit (10) nach Anspruch 1, wobei
ein oberer Teil der vorderen Platte des Luftauslassgehäuses (240) gebogen ist und sich zu einer äußeren Seite des Luftauslassgehäuses (240) erstreckt.

3. Klimaanlage-Inneneinheit (10) nach Anspruch 1, wobei
eine Wärmeaustauschkammer (110) zum Anordnen eines Wärmetauschers in dem Inneneinheit-Gehäuse (100) definiert ist und die Frischluftabführöffnung (231) mit der Wärmeaustauschkammer (110) verbunden ist.

4. Klimaanlage-Inneneinheit (10) nach Anspruch 1, wobei
die Klimaanlage-Inneneinheit (10) eine Schrankklimaanlage-Inneneinheit (10) ist, die hintere Platte der Luftöffnungsschale (211) gegenüber einer hinteren Platte der Schrankklimaanlage-Inneneinheit (10) angeordnet ist und die Seitenplatte der Luftöffnungsschale (211) gegenüber einer Seitenplatte der Schrankklimaanlage-Inneneinheit (10) angeordnet ist.

## Revendications

1. Une unité intérieure de climatiseur (10), comprenant:
un boîtier d'unité intérieure (100); et
un élément d'air frais (200), disposé dans la partie inférieure du boîtier d 'unité intérieure (100), et comportant un module d'orifice de passage d'air (210), et le module d'orifice de passage d'air (210) comprenant:
une coque d'orifice de passage d'air (211), une plaque arrière pourvue d'un orifice d'évacuation d'air souillé (212) pour communiquer avec un tuyau d'évacuation d'air souillé et un orifice d'entrée d'air frais (213) pour communiquer avec un tuyau d'entrée d'air frais, et une plaque latérale de celui-ci pourvue d'un orifice d'entrée d'air souillé (214) pour communiquer avec un environnement intérieur, dans lequel un conduit d'air souillé est formé à partir de l'orifice d'entrée d'air souillé (214) jusqu'à l'orifice d'évacuation de l'air souillé (212), l'orifice d'entrée d'air frais (213) étant relié à un conduit d'air frais menant vers l'extérieur de l'élément d'air frais (200), et
des directions d'extension du conduit d'air souillé et du conduit d'air frais se croisent, dans lequel
l'orifice d'évacuation d'air souillé (212) et l'orifice d'entrée d'air frais (213) sont disposés dans une partie inférieure de la plaque arrière et se trouvent à la même hauteur, et une hauteur de l'orifice d'entrée d'air souillé (214) est supérieure à une hauteur de l'orifice d'évacuation d'air souillé (212) et à une hauteur de l'orifice d'entrée d'air frais (213), dans lequel le module d'orifice de passage d'air (210) comprend en outre:
un noyau d'échange thermique total (215), disposé dans la coque d'orifice de passage d'air (211) à une position opposée par rapport à l'orifice d'entrée d'air souillé (214), et un intérieur de celui-ci pourvu d'une partie du conduit d'air souillé et d'une partie du conduit d'air frais; et
l'orifice d'entrée d'air souillé (214) est disposé sur la plaque latérale près de l'orifice d'entrée d'air frais (213), dans lequel le module d'orifice de passage d'air (210) comprend en outre:
un ventilateur d'évacuation d'air (216), disposé au niveau de l'orifice d'évacuation d'air souillé (212), et un sens d'alimentation en air de celui-ci placé le long d'une direction d'extension de l'orifice d'évacuation d'air souillé (212); et l'élément d'air frais (200) comprend en outre:
un module d'alimentation en air (220), disposé au-dessus du module d'orifice de passage d'air (210), et comportant un boîtier d'alimentation en air (221) et un ventilateur d'air frais (222), dans lequel la section rallongée du conduit d'air frais est définie dans le boîtier d'alimentation en air (221), le ventilateur d'air frais (222) est disposé dans la section rallongée du conduit d'air frais, et le ventilateur d'air frais (222) est réglé pour fournir de l'air vers le haut, dans lequel l'élément d'air frais (200) comprend en outre :
un module de sortie d'air (230), disposé au-dessus du module d'alimentation en air (220), et comprenant un boîtier de sortie d'air (240), dans lequel une extrémité supérieure du boîtier de sortie d'air (240) est pourvue d'un orifice d'évacuation d'air frais (231), dans lequel le module de sortie d'air (230) comprend en outre :
un élément de purification par filtration (232), disposé dans le boîtier de sortie d'air (240) et configuré pour effectuer un traitement de purification sur l'air qui le traverse,
**caractérisé en ce que** le boîtier de sortie d'air (240) comprend:
une plaque de fixation inférieure (241), une première extrémité de celle-ci disposée à l'intérieur d'une plaque frontale du boîtier de sortie d'air (240), et une deuxième extrémité de celle-ci inclinée vers le haut afin de bloquer partiellement un passage d'air dans le boîtier de sortie d'air (240); et
une plaque de fixation supérieure (242), dont une extrémité est disposée à l'intérieur de la plaque frontale du boîtier de sortie d'air (240) et située au-dessus de la première extrémité de la plaque de fixation inférieure (241), et l'autre extrémité de celle-ci inclinée vers le bas et fixée entre la première extrémité et la deuxième extrémité de la plaque de fixation inférieure (241), dans lequel
la plaque de fixation inférieure (241) et la plaque de fixation supérieure (242) étant configurées pour fixer conjointement l'élément de purification par filtration (232).

2. L'unité intérieure de climatiseur (10) selon la revendication 1, dans laquelle
une partie supérieure de la plaque frontale du boîtier de sortie d'air (240) se plie et s'étend jusqu'à un côté extérieur du boîtier de sortie d'air (240).

3. L'unité intérieure de climatiseur (10) selon la revendication 1, dans laquelle
une chambre d'échange thermique (110) pour disposer un échangeur thermique est définie à l'intérieur du boîtier d'unité intérieure (100), et l'orifice d'évacuation d'air frais (231) communique avec la chambre d'échange thermique (110).

4. L'unité intérieure de climatiseur (10) selon la revendication 1, dans laquelle
l'unité intérieure de climatiseur (10) est une unité d'armoire intérieure de climatiseur (10), la plaque arrière de la coque d'orifice de passage d'air (211) est disposée à l'opposé d'une plaque arrière de l'unité d'armoire intérieure du climatiseur (10), et la plaque latérale de la coque de l'orifice de passage d'air (211) est disposée à l'opposé d'une plaque latérale de l'unité d'armoire intérieure de climatiseur (10).
